# EUROPEAN PATENT APPLICATION

(11) **EP 2 223 614 A2**
(43) Date of publication of application: **01.09.2010**
(21) Application number: 09003637.7
(22) Date of filing: 09.11.2004
(51) Int. Cl.: A23L 1/226, A23L 1/22, A23D 9/00, A23D 9/013, A23L 1/30, A23D 9/007

(54) **Body taste improver comprising longchain highly unsaturated fatty acid and/or its ester**

(30) Priority: 12.11.2003 JP 2003382729
(62) Divisional of application: 04818465.9
(71) Applicant: J-Oil Mills, Inc., Tokyo 104-0044 (JP)
(72) Inventor: Yamaguchi, Susumu, Yokohama-shi Kanagawa 230-0053 (JP); Baba, Keiko, Yokohama-shi Kanagawa 230-0053 (JP); Mori, Osamu, Yokohama-shi Kanagawa 230-0053 (JP); Tashima, Ikukazu, Yokohama-shi Kanagawa 230-0053 (JP); Matsuzaki, Narihide, Yokohama-shi Kanagawa 230-0053 (JP)
(74) Representative: Strehl Schübel-Hopf & Partner

(57) **Abstract**

The purpose of the invention is to provide a means for improving the body taste, taste and flavor of foods.

Thus, the present invention is related to a body taste improver comprising a long-chain highly unsaturated fatty acid and/or an ester thereof as a main component and a body taste-increasing component; a body taste improver comprising a long-chain highly unsaturated fatty acid and/or an ester thereof derived from a particular vegetable oil having a lot of γ-linolenic acid; a method for increasing the effect of a body taste improver comprising a long -chain highly unsaturated fatty acid and/or an ester thereof, comprising adding the body taste-increasing component to the body taste improver; a vegetable fat and oil composition with an α-linolenic acid content of 5% or less, comprising a long-chain highly unsaturated fatty acid and/or an ester thereof; a food having an improved body taste comprising the body taste improver or the vegetable fat and oil composition; a method for improving body taste of a food, co mprising adding the body taste improver or the vegetable fat and oil composition to the food; and a method for improving body taste of a food, comprising separately adding a long-chain highly unsaturated fatty acid and/or an ester thereof, and a body taste-increasing component to the food.

## Description

### Technical Field

The present invention relates to a body taste (or "kokumi" taste) improver (or enhancer) comprising a long-chain highly unsaturated fatty acid and/or an ester thereof as a main component and a body taste-increasing component; a method for increasing the effect of a body taste improver comprising a long-chain highly unsaturated fatty acid and/or an ester thereof, comprising adding the body taste-increasing component to the body taste improver; a vegetable fat and oil composition comprising vegetable oil and fat with a low content of α-linolenic acid, and a body taste improver comprising a long -chain highly unsaturated fatty acid and/or an ester thereof; a food having an improved body taste comprising them; and a method for improving body taste of a food, comprising adding the body taste improver or the vegetable fat and oil composition to the food.

### Background of the Invention

Arachidonic acid (cis-5,8,11,14-eicosatetraenoic acid) belongs to long-chain highly unsaturated (polyunsaturated) fatty acids, and exists in a phospholipid derived from animal organs or tissues. This fatty acid is an essential one, and is very important as a precursor for the syn thesis of prostaglandin, thromboxane, leukotriene, etc

Attempts have been made to add the long-chain highly unsaturated fatty acids such as arachidonic acid and esters thereof for enrichment of nutrition and provision of various physiological functions in view of the above remarkable functions of arachidonic acid.

An enriched composition described in Japanese Patent Application laid open Hei 10 (1998)-99048 comprises arachidonic acid in an amount of 0.1∼10 % by weight as one of the components added for realizing a composition similar to that of mother's milk.

As an example of the above ester, Japanese Patent Application laid open Hei 4 (1992)-197134 discloses fat and oil composition for frying, which is protected against a decrease in temperature of an inner material due to evaporation latent heat. The composition comprises as constituting fatty acid unsaturated fatty acids such as arachidonic acid in an amount of 20∼60 % by weight.

Japanese Patent Application laid open Hei 9 (1997)-13075 discloses fat and oil consisting of glyceride comprising long-chain highly unsaturated fatty acids such as arachidonic acid, and having a function of reducing the concentration of fatty and oil in blood. The glyceride is obtained by transesterification. It has a different structure from natural one, in which less than 40 mol % of the total long-chain highly unsaturated fatty acids are bound to 2 position of the glyceride.

Japanese Patent Application laid open Hei 9 (1997) -13076 discloses fat and oil with the same composition as the above one, having a function of inhibiting platelet aggregation.

Japanese Patent Application laid open Hei 11 (1999)-89513 discloses a synthetic fat and oil composition similar to human milk fat and oil, in which n -6 long-chain highly unsaturated fatty acid such as arachidonic acid, is used as one of the constituting fatty acids of triglyceride.

Furthermore, Japanese Patent Application laid open Hei 10 (1998)-70992 and Japanese Patent Application laid open Hei 10 (1998)-191886 disclose edible oil derived from microorganism, which has a lot of arachidonic acid in a form of triglyceride. Its preferred application includes modified milk for a premature baby or an infant, food for infant, and food for a pregnant woman.

However, there is no disclosure of technology about use of the long-chain highly unsaturated fatty acid for the purpose of improving taste such as a body taste of foods and vegetable fat and oil, or no description to suggest a possibility to do that.

There has been a problem th at the addition of the long-chain highly unsaturated fatty acid to foods would deteriorate their taste due to odor smell reversion flavor derived from oxidized decomposition of the fatty acid. Many means have been tried to solve the problem.

One of the those means is disclosed in the Japanese Patent Application laid open Sho 63 (1988)-44843 wherein a highly unsaturated fatty acid is included in an inner oil phase of an oil-in-water-in-oil-type emulsion composition. The Japanese Patent Application laid open Hei 6 (1994)-172782 discloses technology of pulverizing fat and oil comprising a highly unsaturated fatty acid. The Japanese Patent Application laid open Hei 9 (1997)-176679 discloses technology of mixing anti-oxidant powder with a pulverized unsaturated fatty acid. The Japanese Patent Application laid open Hei 9 (1997)-263784 discloses technology of mixing δ-tocopherol with fat and oil comprising a polyunsaturated fatty acid. The Japanese Patent Application laid open Hei 11 (1999)-12592 discloses technology of adding soybean source to fish fat and oil comprising a highly unsaturated fatty acid.

The Japanese Patent Application laid open 2001-78702 discloses as an example of application of highly unsaturated fatty acids in the field of food a seasoning having enriched mildness, taste, and after taste, which is prepared by mixing fat and oil with extract into an oil-in-water-type emulsion. Fish oil or fat and oil comprising the fish oil is disclosed as an example of the above fat and oil, including one wherein 10 % by weight or more of the fish oil is made of n-3 (ω-3) highly unsaturated fatty acids.

It is preferred to use a fatty acid ester of polyglycerine as emulsifier and to use extract wherein an antioxidant such as carnosine and anserine for preventing oxidization of the fat and oil. No oxidization treatment such as heating treatment is not carried out in a process for the reparation of the seasoning. Examples of foods on which the effect of the seasoning is significantly performed include minced products, fish and processed fish products.

The Japanese Patent No.3220155 discloses a flavoring composition which is prepared by oxidization of fatty acids except milk fat and is characterized by comprising at least one of polyunsaturated fatty acids with n-3 non-conjugated double bond in an amount of more than 0.01 % by weight. This flavoring composition comprises sweet and creamy note that is remarkably recognized in butter-like flavor. In order to obtain such note, the fat and oil need to be subjected to oxidization treatment, which has to be carried out under control during a process in the presence of an anti-oxidant that will slightly delay the oxidization. As the flavor generated in the oxidization treatment contains volatile components, the oxidization treatment is preferred to do in a closed system. Actually, the oxidization treatment is done by using a reflux condenser in an example. It is described that the flavoring composition is particularly suitable in use for adding flavor to foods that are advantageously desired to have butter flavor.

US Patent No.3,689,289 discloses a method for the production of artificial chicken flavor by heat-reacting reducing sugar, amino acid and arachidonic acid or its methylester under particular conditions. Further, International Publication WO03/051139 pamphlet discloses a method for the production of artificial chicken flavor by heat-reacting reducing sugar, amino acid and arachidonic acid under particular conditions, wherein heat resistance and persistency of the artificial chicken flavor is obtained by using the arachidonic acid in a form of glycerin ester.

As a product obtained by heating three compounds of the sugar, amino acid and arachidonic acid will give the artificial chicken flavor in these methods, there is no description about improvement of "umami" taste of foods by use of the long-chain highly unsaturated fatty acid such as arachidonic acid alone, or in a combination with the amino acid or sugar.

Japanese Patent Application laid open 2002-95439 discloses seasoning comprising glyceride of a long-chain highly unsaturated fatty acid, which enables one to take the long-chain highly unsaturated fatty acid together with a wide range of foods. The purpose of this invention is to increase oxidation stability of the long-chain highly unsaturated fatty acid that is susceptible to deterioration due to oxidation. Accordingly, it is characterized by adding the glyceride of the long-chain highly unsaturated fatty acid to processed foods prepared by fermentation of soybean or fish and shell, or to the seasoning composed mainly of tomato's components. Thus, there is no disclosure or teaching of oxidization treatment of the long-chain highly unsaturated fatty acid, or of the improvement or provision of body taste of foods by the same acid per se.
[Patent document 1] Japanese Patent No.3220155
[Patent document 2] US Patent No.3,689,289
[Patent document 3] International Publication WO03/051139 pamphlet
[Patent document 4] Japanese Patent Application laid open 2002-95439

### Summary of the Invention

In the field of food, there are some kinds of foods that require "body taste" and "rich or thick taste", such as fried foods including pork cutlet, fat and oil containing foods including curry source and "gyo-za" (Chinese-style pork dumpling)." Conventionally, flavor has been added, or animal fat and oil have been used alone or in combination with vegetable fat and oil in order to give the above tastes to those foods.

However, there is a problem that the added flavor is volatilized during a heating treatment so that the given body taste can not be maintained. There is also a concern that cholesterol or saturated fatty acids contained in the animal fat and oil may adversely affect health. On the other hand, since the vegetable fat and oil contain a small amount of cholesterol or saturated fatty acids, there is a problem that foods cocked with the vegetable fat and oil would taste simple or plain, making the foods that need body taste unsatisfactory.

It is therefore desired to provide fat and oil being free of cholesterol and having a low content of saturated fatty acid, while having body taste.

A long-chain highly unsaturated fatty acid such as arachidonic acid and/or an ester thereof has been considered for a long time a causative agent of putrefactive smell of meat and the like and off-flavor. However, it was found that when foods are mixed with the long-chain highly unsaturated fatty acid and/or the ester thereof alone or are subjected to oxidization treatment such as heating with vegetable fat and oil comprising a predetermined amount of said long-chain highly unsaturated fatty acid and/or the ester thereof, the body taste of the foods will be improved and the original tastes of the foods will be increased (PCT/JP03/00182).

The present inventors has studied to overcome the above problem, and finally found that a body taste-improving effect may be further improved by adding a body taste-increasing component such as α-tocopherol and/or an iron component to a body taste improver comprising a long -chain highly unsaturated fatty acid and/or an ester thereof. The present inventors also found that by adding a long-chain highly unsaturated fatty acid and/or an ester thereof to a vegetable fat and oil composition with a low content of α-linolenic acid and/or linoleic acid, the body taste of the vegetable fat and oil composition may be much improved. The present invention was completed based on the above findings.

Thus, the present invention relates to a body taste improver comprising a long-chain highly unsaturated fatty acid and/or an ester thereof as a main component and a body taste-increasing component; a body taste improver comprising a long-chain highly unsaturated fatty acid and/or an ester thereof derived from a particular vegetable oil having a lot of γ-linolenic acid; a method for increasing the effect of a body taste improver comprising a long -chain highly unsaturated fatty acid and/or an ester thereof, comprising adding the body taste-increasing component to the body taste improver; a vegetable fat and oil composition with an α-linolenic acid content of 5% or less, comprising a long-chain highly unsaturated fatty acid and/or an ester thereof; a food having an improved body taste comprising the body taste improver or the vegetable fat and oil composition; a method for improving body taste of a food, comprising adding the body taste improver or the vegetable fat and oil composition to the food; and a method for improving body taste of a food, comprising separately adding a long-chain highly unsaturated fatty acid and/or an ester thereof, and a body taste-increasing component to the food.

The "body taste improver" in the present specification means an agent that effects the advantages of the present invention, i.e., an agent that newly provides or improves a significant "body taste" or "rich or thick taste" of the foods to which it is added. The "body taste" will be appreciated by a sensory test described in the examples of the present specification.

The "body taste-increasing component" in the present specification means a component that can additively or synergistically increase the above advantages by the long-chain highly unsaturated fatty acid and/or the ester thereof.

The body taste-improving effect may be further improved by adding the body taste-increasing component such as α-tocopherol and/or iron component to the body taste improver comprising the long-chain highly unsaturated fatty acid and/or the ester thereof. By adding the long-chain highly unsaturated fatty acid and/or the ester thereof to the vegetable fat and oil composition with a low content of α-linolenic acid and/or linoleic acid, the body taste of the vegetable fat and oil composition may be much improved.

There is no limitation on the kind or structure of the body taste-increasing component, which includes as its representative examples α-tocopherol and the iron component. Although it should not be construed to constrain the present invention in any way, α-tocopherol and the iron component are known to accelerate oxidization of fat and oil.

The iron component may be provided from any commercially available iron-containing materials know to those skilled in the art, including ion salts such as ferrous sulfate, ferrous citrate, ferric citrate, ferrous gluconate, ferric chloride, and ferrous lactate; and heme iron; plasma powder; and blood cell powder. There are three formations of Fe, i.e., iron atom, ferrous salt and ferric salt, ferrous salt being preferable. The iron component may be mixed with the long-chain highly unsaturated fatty acid and/or the ester thereof by any known methods such as solubilization, dispersion, and emulsion.

The α-tocopherol may also be provided from any commercial materials know to those skilled in the art. A commercially available tocopherol preparation containing α-tocopherol as the richest tocopherol component, more specifically one containing α-tocopherol of 50% or more of the total tocopherol may be used as such as to provide the α-tocopherol in the present invention. Vegetable fat and oil containing a high content of α-tocopherol may also be used to provide the α-tocopherol in the present invention. Alternatively, β-, γ-, and δ-tocopherols may be removed form any commercially available tocopherol preparation to give one having enriched α-tocopherol to be used in the present invention.

There is no limitation on a content of the body taste-increasing component in the body taste improver, being preferably 50∼15,000 ppm, more preferably 50∼5,000 ppm, much more preferably 100∼2,000 ppm in the case of α-tocopherol, and 0.1∼200 ppm, preferably 0.5∼100 ppm as of Fe in the case of the iron component from the view points of the advantages and cost.

The "long-chain highly unsaturated fatty acid" in the present specification means a fatty acid having 20 or more of carbon atoms and 3 or more of double bonds in the case of n-3 long-chain highly unsaturated fatty acids, and a fatty acid having 18 or more of carbon atoms and 3 or more of double bonds in the case of n-6 long-chain highly unsaturated fatty acids. A long-chain highly unsaturated fatty acid having 20∼24 carbon atoms and 4∼6 double bonds is preferred in both cases. Examples of the n-6 long-chain highly unsaturated fatty acids include γ-linolenic acid, arachidonic acid (AA) and docosatetraenoic acid (DTA), arachidonic acid being preferable. Examples of the n -3 long-chain highly unsaturated fatty acids include docosahexaenoic acid (DHA) and eicosapentaenoic acid (EPA).

There is no limitation on an origin of the long-chain highly unsaturated fatty acid such as arachidonic acid and its ester used in the present invention. Those skilled in the art may optionally use those derived from various animals and vegetables, microorganisms and algae that are commercially available.

For example, Japanese Patent Applications laid open Hei 10 (1998) -70992 and Hei 10 (1998) -191886 disclose edible fat and oil derived from bacteria, which comprises a lot of arachidonic acid in a form of triglyceride. The arachidonic acid may be therefore obtained form said edible fat and oil.

It is also possible to mix and use together two or more kinds of the long -chain highly unsaturated fatty acids, or the long-chain highly unsaturated fatty acids that have different origins but belong to the same kind.

There is no limitation on structure and preparation of the ester of the long -chain highly unsaturated fatty acid, and monohydric and polyhydric alcohols may be used as alcohol that constitutes the above ester. Glycerol is one of the preferred examples of the polyhydric alcohols in view of safety and cost. The glycerol will constitute tri-glyceride, di-glyceride or mono-glyceride. Other fatty acids besides the long-chain highly unsaturated fatty acid may be contained as fatty acids that constitute the ester of the present invention.

Vegetable oils such as soybean oil, corn oil, olive oil, HOS, and canola oil do not contain γ-linolenic acid. On the other hand, borage oil, evening primrose oil, rose hip oil and Ribes Nigrum oil contain γ-linolenic acid in an amount of about 3∼22%. Especially, as borage oil contains γ-linolenic acid in an amount of about 22%, it may be preferably used as a material for the long-chain highly unsaturated fatty acid in the present invention.

Thus, the present invention relates to a body taste improver comprising the long-chain highly unsaturated fatty acid and/or the ester thereof derived from vegetable oil selected from the group consisting of borage oil, evening primrose oil, rose hip oil and Ribes Nigrum oil, especially those derived from borage oil.

There is no limitation on a content of the long-chain highly unsaturated fatty acid and its ester comprised in the body taste improver according to the present invention. However, if the content is too low, a more amount of in the body taste improver shall be needed, which may cause disadvantageous effects due to other components contained therein. The body taste improver of the present invention comprises the long-chain highly unsaturated fatty acid and its ester preferably in an amount of 10 % by weight or more, more preferably 30 % by weight or more.

The body taste improver of the present invention may additionally contains other optional components known to those skilled in the art, such as an emulsifier; tocopherols; sterols; phospholipids and other fatty acids; triglycerides, diglycerides and monoglycerides containig the other fatty acids.

It is preferable to subject the n-3 long-chain highly unsaturated fatty acid and/or the ester thereof to an oxidization treatment in order to sufficiently obtain the advantages of the present invention. There is no limitation on a method for the oxidization treatment, which, for example, includes heating treatment. There is no limitation on a method for heating treatment, either. It is not necessary to carry out the oxidization treatment in the presence of an antioxidant, or in a closed system. The heating may therefore be normally carried out at 40°C ∼200°C for 0.1∼240 hours, preferably at 80°C∼180°C for 0.5∼72 hours.

Although it is not necessary to subject the n-6 long-chain highly unsaturated fatty acid and/or the ester thereof to the oxidization treatment in order to effect its advantage as the body taste improver, whose advantages shall be further increased by the oxidization treatment.

The oxidization treatment may also be done by, for example, heating the body taste improver comprising the long-chain highly unsaturated fatty acid and/or the ester thereof, or the foods which comprise the body taste improver.

The long-chain highly unsaturated fatty acid is more volatile than its ester, especially glycerine ester, even a less amount of said acid can effect the advantages of the present invention. On the other hand, as esters are relatively less volatile but persistently effective, they are comprised in the composition in a relatively larger amount.

The present invention further relates to the vegetable fat and oil composition comprising the body taste improver. Any vegetable fat and oil known to those skilled in the art may be used as a base oil and fat in the present invention, including soybean oil, rape-seed oil, corn oil, sunflower oil, HOS, rice oil, sesame oil, olive oil and palm oil. Among them, the advantages of the present invention can be effectively obtained by adding the body taste improver to soybean oil, rape-seed oil, corn oil and palm oil, which are mainly used for heating cooking such as frying and stir-fry. Any tow or more kinds of the vegetable fat and oil may be optionally mixed and used.

A content of the long-chain highly unsaturated fatty acid and/or the ester thereof in the vegetable fat and oil composition may be optionally determined by those skilled in the art, depending on a kind of the long-chain highly unsaturated fatty acid and use of the vegetable fat and oil composition, being usually 10 - 100,000 ppm, preferably 10 - 20,000 ppm, more preferably 10 - 5,000 ppm, much preferably 20 - 1,000 ppm as of the long-chain highly unsaturated fatty acid. Especially, when the vegetable fat and oil composition comprising the long-chain highly unsaturated fatty acid such as γ-linolenic acid derived from the vegetable oil is used as a base oil for the fat and oil for oil-cooking such as frying, or for the oil for aroma or flavor, the content of the long-chain highly unsaturated fatty acid such as γ-linolenic acid is usually 0.05∼10%, preferably 0.1∼5% in the vegetable fat and oil composition.

As already mentioned in the present specification, borage oil, evening primrose oil, rose hip oil and Ribes Nigrum oil contain γ-linolenic acid in an amount of about 3∼22%. Accordingly, the oil derived from these vegetables may be advantageously used as such as the vegetable fat and oil composition of the present invention without any further addition of the long-chain highly unsaturated fatty acid and/or the ester thereof.

Furthermore, the present inventors found that the body taste may be much more effectively improved if formulation of the fat acids of the vegetable fat and oil to be mixed with the long -chain highly unsaturated fatty acid and/or the ester thereof according to the present invention particular conditions.

Thus, a vegetable fat and oil composition having an α-linolenic acid content of 5% or less, for example 0.01∼5%, preferably 0.05∼3% is preferable. Further, a vegetable fat and oil composition having an oleic acid content of 20∼86% and /or a linoleic acid content of 3∼25% is more preferable.

As already mentioned above, the vegetable fat and oil composition comprises the long-chain highly unsaturated fatty acid and/or the ester thereof in an amount of usually 10 - 100,000 ppm, preferably 10 - 20,000 ppm, more preferably 10 - 5,000 ppm, much preferably 20 - 1,000 ppm. The vegetable fat and oil composition does not necessarily comprise the body taste-increasing component.

Since borage oil and Ribes Nigrum oil do not substantially contain α-linolenic acid, but contain the above amount of oleic acid, they are preferable as the vegetable fat and oil composition as such from these points of view.

The vegetable fat and oil composition thus obtained according to the present invention may be applied to various cooking methods such as those of heating preferably at 80°C ∼300°C, and more preferably at 110°C ∼300°C. The heating treatment at such temperature range will improve body taste and increase the original tastes of the foods cooked with the vegetable fat and oil composition.

Finally, the present invention relates to a food with an improved body taste, comprising the body taste improver or the vegetable fat and oil composition according to the present invention. There is no limitation on the kind of subject foods, which include foods cooked with oil such as various fried foods and stir-fry; and fat-containing foods such as curry source, Chinese-style pork dumplings and steamed Chinese-style pork dumplings. The foods according to the present invention are provided with a significant body taste and thickness or rich taste by the body taste improver or the vegetable fat and oil composition comprised therein. The body taste of these foods may be further improved with heating treatment.

Accordingly, the present invention is related to a method for improving the body taste of a food, comprising adding the body taste improver, or the vegetable fat and oil composition. The long-chain highly unsaturated fatty acid and/or the ester thereof, and the body taste-increasing component comprised in the body taste improver may be separately added to the food so as to obtain the same advantages. Accordingly, the present invention also related to a method for improving the body taste of a fo od, comprising separately adding the long -chain highly unsaturated fatty acid and/or the ester thereof, and the body taste-increasing component to the food. In the case of the separate addition of the above components, it is preferable to obtain the foods that finally comprise the long-chain highly unsaturated fatty acid and/or the ester thereof and the body taste-increasing component in the same amount as in the foods to which the body taste improver has been added. The timing and order of the addition of these components may be optionally selected by those skilled in the art.

There is no limitation on an amount of the body taste improver or vegetable fat and oil composition in the foods. Usually, the body taste-improving effects may be obtained with the long-chain highly unsaturated fatty acid and/or the ester thereof in an amount of 0.1∼100,000 ppm, preferably of 0.1∼10,000 ppm at an eating time. For example, the body taste-improving effects may be obtained with respect to liquid foods such as soy source and soup with the long-chain highly unsaturated fatty acid and/or the ester thereof in an amount preferably of 1∼1,200 ppm, more preferably of 1∼500 ppm at an eating time. For dry foods such as a hamburger, the body taste-improving effects may be obtained with the long-chain highly unsaturated fatty acid and/or the ester thereof in an amount preferably of 20∼2,500 ppm, more preferably of 20∼1,000 ppm.

The present invention will be explained in more detail with reference to the following examples, which should not be construed as limiting a technical scope of the present invention. The term "%" in the following examples means "% by weight" unless otherwise noted.

The content of tocopherol is determined by Standard Methods for the Analysis of Fats, Oils and Related Materials 2.4.10 -1996 (Japan Oil Chemistry Association). The content of fatty acid is determined by Standard Methods for the Analysis of Fats, Oils and Related Materials 2.4.2.2 -1996 (Japan Oil Chemistry Association).

### Sensory test:

In the sensory test, the improvement of body taste refers to the increase of " strength of aroma", "strength of flavour", "strength of taste" and "strength of aftertaste" without any deterioration of "goodness of aroma", "goodness of flavour", "goodness of taste" and "goodness of aftertaste", respectively.

Panelists: n=7
The symbols used in the following Tables showing the test results means as follows:
"X": weaker or worse than control;
"Δ": the same degree as control;
"○": stronger or better than control;
"⊚": much stronger or much better than control.

### Example

### Long-chain highly unsaturated fatty acid used in the Examples:

AA-containing triglyceride (AATG): AA content of 40-45 %, distributed by Nakarai Tesk Ltd. and manufactured by Suntory Ltd;
Borage oil :γ-Linolenic acid content of 20%, manufactured by Statfold Co.;
Low Linolenic Canola Oil : "LLC" manufactured by Ajinomoto Oil Mills Co.Inc.;
Rape seed oil: "CO" manufactured by Ajinomoto Oil Mills Co. Inc.
High Oleic Safflower Oil: "HOS" manufactured by Ajinomoto Oil Mills Co. Inc.

**[TABLE 1]**

| Fatty acid composition (%) | | | | | |
|---|---|---|---|---|---|
| | C16 | C18:0 | C18:1 | C18:2 | C18:3(n-3) |
| CO | 3.9 | 1.9 | 62.5 | 19.5 | 8.8 |
| HOS | 4.6 | 1.9 | 76.3 | 14.2 | 0.2 |
| LLC | 3.3 | 1.7 | 73.5 | 15.4 | 2.4 |

**[TABLE 2]**

| Tocophrol preparation and its composition | | | | |
|---|---|---|---|---|
| "Vitamin E5-67" manufactured by ADM Co. | | | | |
| | α | β | γ | δ |
| Content (mg/g) | 707 | 16 | 4 | 3 |

### <Effect of α-tocopherol as a body taste-increasing component>

The following long-chain highly unsaturated fatty acid and/or the ester thereof and the α-tocopherol preparation were mixed with the vegetable fat and oil composition composition to give the following preparation oil.
(1) LLC
(2) 1% AAATG/LLC (AA content of 0.4%)
(3) 0.5% AATG/LLC (Aacontent of 0.2%)
(4) 1% AATG + 0.002% α-tocopherol preparation/LLC (AA content of 0.4%, α-tocopherol content of 14.1 ppm)
(5) 1% AATG + 0.01% α-tocopherol preparation/LLC (AA content of 0.4%, α-tocopherol content of 70.7 ppm)
(6) 1% AATG + 0.02% α-tocopherol preparation/LLC (AA content of 0.4%, α-tocopherol content of 141 ppm)
(7) 1% AATG + 0. 2% α-tocopherol preparation/LLC (AA content of 0.4%, α-tocopherol content of 1,410 ppm)
(8) 1% AATG + 2% α-tocopherol preparation/LLC (AA content of 0.4%, α-tocopherol content of 14,100 ppm)
(9) 0.5% AATG + 0.02% α-tocopherol preparation/LLC (AA content of 0.2%, α-tocopherol content of 141 ppm)

Each preparation oil (15 g) was mixed with soft flour (15g), heated at 120°C for 30 min., then mixed with 3g of curry powder ("Tokusei SB Curry" manufactured by S & B Food Inc. and heated again at 120°C for 10 min. to give curry roux. Consomme soup (Consomme" manufacture by Ajinomoto Co. Inc., 1.7 % solution) of 500 ml was added and heated. The curry roux was diluted with the consomme soup to give curry soup.

**[TABLE 3]**

| Comparison between (1) control and (2) | | |
|---|---|---|
| Preparation oil (body taste improver) | (1) | (2) |
| AA concentration at eating time (ppm) | 0 | 112.5 |
| Strength of aroma | - | ⊚ |
| Goodness of aroma | - | ⊚ |
| Strength of flavor | - | ⊚ |
| Goodness of flavor | - | ⊚ |
| Strength of taste | - | ⊚ |
| Goodness of taste | - | ⊚ |
| Strength of aftertaste | - | ⊚ |
| Goodness of aftertaste | - | ⊚ |

**[TABLE 4]**

| Comparison between (2) control and (3) - (9) | | | | | | | | |
|---|---|---|---|---|---|---|---|---|
| Preparation oil (body taste improver) | (2) | (3) | (4) | (5) | (6) | (7) | (8) | (9) |
| α-tocopherol concentration in oil (ppm) | 0 | 0 | 14 | 71 | 141 | 1410 | 14100 | 141 |
| AA concentration. at an eating time (ppm) | 112.5 | 56.3 | 112.5 | 112.5 | 112.5 | 112.5 | 112.5 | 56.3 |
| Strength of aroma | - | X | Δ | ○ | ○ | ⊚ | ⊚ | ⊚ |
| Goodness of aroma | - | X | Δ | ⊚ | ⊚ | ⊚ | ⊚ | ⊚ |
| Strength of flavor | - | X | Δ | ○ | ○ | ⊚ | ⊚ | ⊚ |
| Goodness of flavor | - | X | Δ | ○ | ⊚ | ⊚ | ⊚ | ⊚ |
| Strength of taste | - | X | Δ | ⊚ | ⊚ | ⊚ | ⊚ | ⊚ |
| Goodness of taste | - | X | Δ | ⊚ | ⊚ | ⊚ | ○ | ⊚ |
| Strength of aftertaste | - | X | Δ | ⊚ | ⊚ | ⊚ | ⊚ | ⊚ |
| Goodness of aftertaste | - | X | Δ | ○ | ○ | ○ | ○ | ⊚ |

The results in TABLE 4 show that the body taste improving effect was increased by the existence of α-tocopherol in each amount of the preparation oil (5) - (8) when compared with the preparation oil (2) (control:no α-tocopherol added), even when they had the same AATG concentration. Furthermore, it was observed that while the preparation oil (3) having a lower AATG concentration than the preparation oil (2) was inferior to the preparation oil (2) in the body taste-improving effect, the preparation oil (9) mixed with α-tocopherol preparation showed a higher body taste-improving effect than the preparation oil (2), although it had the same AATG concentration as the preparation oil (3).

### <Effect of Fe component as a body taste-increasing component>

Ferrous sulfate.7H₂O was added to 2.5% AATG/LLC at a concentration of 0.00005∼0.1% (Fe: 0.1∼200ppm) and homogeneously dispersed. The resulting preparation oil was added to 0.8% brine to a final concentration of 0.1%.
(1) 2.5% AATG/LC
(2) Ferrous sulfate.7H₂O 0.00005% (Fe:0.1 ppm)/2.5% AATG/LLC
(3) Ferrous sulfate.7H₂O 0.00025% (Fe:0.5 ppm)/2.5% AATG/LLC
(4) Ferrous sulfate.7H₂O 0.005% (Fe:10 ppm)/2.5% AATG/LLC
(5) Ferrous sulfate.7H₂O 0.05% (Fe:100 ppm)/2.5% AATG/LLC
(6) Ferrous sulfate.7H₂O 0.1% (Fe:200 ppm)/2.5% AATG/LLC

**[TABLE 5]**

| Preparation oil (body taste improver) | (1) | (2) | (3) | (4) | (5) | (6) |
|---|---|---|---|---|---|---|
| AA concentration at an eating time (ppm) | 10 | 10 | 10 | 10 | 10 | 10 |
| Fe concentration in oil (ppm) | 0 | 0.1 | 0.5 | 10 | 100 | 200 |
| Strength of aroma | - | Δ | ○ | ⊚ | ⊚ | ⊚ |
| Goodness of aroma | - | ○ | ○ | ⊚ | ○ | Δ |
| Strength of flavor | - | Δ | ○ | ⊚ | ⊚ | ⊚ |
| Goodness of flavor | - | ○ | ○ | ○ | ○ | Δ |
| Strength of taste | - | Δ | ○ | ⊚ | ⊚ | ⊚ |
| Goodness of taste | - | ○ | ○ | ⊚ | ○ | Δ |

The results in TABLE 5 show that all the strength of aroma, flavor and taste was increased by the existence of Fe component in the preparation oil (2) - (6) compared with the preparation oil (1) control, even when the concentration of the AATG in brine was the same among them. They also show that the aroma, flavor and taste in the preparation oil (2) - (5) were more preferred than those of the preparation oil (1) control, but the aroma, flavor and taste in the preparation oil (6) were less preferred than the preparation oil (3), (4) and (5) probably due to those derived from Fe.

Ferrous sulfate.7H₂O and 5% AATG/LLC were added at the following concentration to instant noodle soup (by nine-time dilution of FAITAN Tonkostu soy sauce, manufactured by Ajinomoto Co. Inc) and evaluated with respect to aroma, flavor and taste.
(1) 5% AATG/LLC, 1g/1,000g noodle soup
(2) (1) + Ferrous sulfate.7H₂O 0.001mM/1,000g noodle soup (Fe:0.06 ppm)
(3) (1) + Ferrous sulfate.7H₂O 0.01 mM/1,000g noodle soup (Fe:0.56 ppm)
(4) (1) + Ferrous sulfate.7H₂O 0. 1mM/1,000g noodle soup (Fe:5.6 ppm)
(5) (1) + Ferrous sulfate.7H₂O 1.0mM/1,000g noodle soup (Fe:56 ppm)
(6) (1) + Ferrous sulfate.7H₂O 5.0mM/1,000g noodle soup (Fe:280 ppm)

**[TABLE 6]**

| Preparation oil (body taste improver) | (1) | (2) | (3) | (4) | (5) | (6) |
|---|---|---|---|---|---|---|
| AA concentration at an eating time (ppm) | 20 | 20 | 20 | 20 | 20 | 20 |
| Fe concentration (ppm) | 0 | 0.06 | 0.56 | 5.6 | 56 | 280 |
| Strength of aroma | - | Δ | ○ | ⊚ | ⊚ | ⊚ |
| Goodness of aroma | - | ○ | ○ | ⊚ | ○ | Δ |
| Strength of flavor | - | Δ | ○ | ⊚ | ⊚ | ⊚ |
| Goodness of flavor | - | ○ | ○ | ○ | ○ | Δ |
| Strength of taste | - | Δ | ○ | ⊚ | ⊚ | ⊚ |
| Goodness of taste | - | ○ | ⊚ | ○ | ○ | Δ |

The results in TABLE 6 show that all the strength of aroma, flavor and taste was increased by the existence of Fe component in the preparation oil (2) - (6) compared with the preparation oil (1) control, even when the concentration of the AATG in the instant noodle soup was the same among them. They also show that the aroma, flavor and taste in the preparation oil (2) - (5) were more preferred than those of the preparation oil (1) control, but the aroma, flavor and taste in the preparation oil (6) were less preferred than the preparation oil (3), (4) and (5) probably due to those derived from Fe.

### <Effect of borage oil as a body taste improver >

The following vegetable fat and oil composition was prepared by mixing borage oil and LLC. Potato shoe strings of 150 g ("Shoe string" manufactured by Ajinomoto Frozen Foods Co., Inc.) were fried in 3 kg of each of the above vegetable fat and oil composition at 180 °C for 3 min.

**[TABLE 7]**

| | | | | | | | | | | |
|---|---|---|---|---|---|---|---|---|---|---|
| Borage oil content (%) | 0 | 0.1 | 0.5 | 1 | 5 | 10 | 20 | 30 | 50 | 100 |
| γ-linolenic acid content (%) | 0 | 0.02 | 0.1 | 0.2 | 1 | 2 | 4 | 6 | 10 | 20 |
| Strength of aroma | - | Δ | ○ | ⊚ | ⊚ | ⊚ | ⊚ | ⊚ | ⊚ | ⊚ |
| Goodness of aroma | - | Δ | ○ | ⊚ | ⊚ | ⊚ | ○ | ○ | ○ | X |
| Strength of flavor | - | Δ | ○ | ○ | ⊚ | ⊚ | ⊚ | ⊚ | ⊚ | ○ |
| Goodness of flavor | - | Δ | ○ | ○ | ⊚ | ⊚ | ⊚ | ○ | ○ | X |
| Strength of taste | - | Δ | ○ | ○ | ⊚ | ⊚ | ⊚ | ⊚ | ⊚ | ⊚ |
| Goodness of taste | - | Δ | ○ | ○ | ⊚ | ⊚ | ⊚ | ○ | ○ | X |
| Strength of aftertaste | - | Δ | ○ | ○ | ⊚ | ⊚ | ⊚ | ⊚ | ⊚ | ⊚ |
| Goodness of aftertaste | - | Δ | ○ | ○ | ⊚ | ⊚ | ⊚ | ○ | ○ | X |

The shoe strings were provided with body taste by being fried in borage oil comprising γ-linolenic acid as the long-chain highly unsaturated fatty acid. On the other hand, an excess amount of γ-linolenic acid in the oil would deteriorate the aroma, flavor and taste.

By using the following preparation oil, seasoned and steamed pilaf was cooked.
(1) LLC
(2) 3% borage oil/LLC (γ-linolenic acid content of 0.6 %)
(3) 30% borage oil/LLC (γ-linolenic acid content of 6 %)
(4) Borage oil (γ-linolenic acid content of 20 %)

Pilaf was cooked by adding water (300 g), "Rice Cook for Fried Rice" manufactured by Ajinomoto Co. Inc.(10 g) and each preparation oil to unwashed rice (200 g), and then boiling it in a rice cooked. The results in TABLE 8 show that the pilaf was provided with body taste by being cooked with borage oil comprising an appropriated amount of γ-linolenic acid.

**[TABLE 8]**

| Preparation oil | (1) | (2) | (3) | (4) |
|---|---|---|---|---|
| Added amount (g) | 5 | 5 | 5 | 5 |
| Conc. of γ-linolenic acid added (ppm) | 0 | 58 | 580 | 1,942 |
| Strength of aroma | - | ○ | ⊚ | ⊚ |
| Goodness of aroma | - | ○ | ⊚ | ⊚ |
| Strength of flavor | - | ○ | ⊚ | ⊚ |
| Goodness of flavor | - | ○ | ⊚ | ○ |
| Strength of taste | - | ○ | ⊚ | ⊚ |
| Goodness of taste | - | ○ | ⊚ | ○ |
| Strength of aftertaste | - | ○ | ⊚ | ⊚ |
| Goodness of aftertaste | - | ○ | ⊚ | ○ |

### <Effect of the composition of fatty acids>

The following fat and oil composition was prepared.
(1) 0.0625% AATG/CO (AA content of 250 ppm)
(2) 0.125% AATG/CO (AA content of 500 ppm)
(3) 0.0625% AATG/LLC (AA content of 250 ppm)
(4) 0.0625% AATG/HOS(AA content of 250 ppm)

Pork Cutlet was prepared by seasoning pork loin (75g) with salt (0.6g) and a small amount of pepper, coating it with wheat flour, 20% egg solution and bread crumb, followed by deep-frying at 180°C for 30 min. in the above fat and oil preparations. The results in TABLE 9 show that the body taste-improving effect was varied depending on the composition of the fatty acids in the fat and oil preparation used, even if the AA content was the same. More specifically, it was revealed that the oil such as HOS and LLC was preferble, which comprises α-linolenic acid (C18:3 (n-3)) in an amount of 5 % or less.

**[TABLE 9]**

| Preparation oil | (1) | (2) | (3) | (4) |
|---|---|---|---|---|
| | CO | CO | LLC | HOS |
| AAG content (ppm) | 250 | 500 | 250 | 250 |
| Strength of aroma | Δ | ⊚ | ⊚ | ⊚ |
| Goodness of aroma | Δ | ○ | ○ | ○ |
| Strength of flavor | Δ | ⊚ | ⊚ | ⊚ |
| Goodness of flavor | Δ | ○ | ○ | ○ |
| Strength of taste | Δ | ⊚ | ⊚ | ⊚ |
| Goodness of taste | Δ | ⊚ | ⊚ | ⊚ |
| Strength of aftertaste | Δ | ⊚ | ⊚ | ⊚ |
| Goodness of aftertaste | Δ | ○ | ○ | ⊚ |

### Advantages of the invention

The foods may be provided with the body taste or rich taste by being cooked with the body taste improver or the vegetable fat and oil composition comprising it.

## Claims

1. A body taste improver comprising a long-chain highly unsaturated fatty acid and/or an ester thereof derived from vegetable oil selected from the group consisting of borage oil, evening primrose oil, rose hip oil and Ribes Nigrum oil.

2. A body taste improver according to claim 1, which is the body taste improver comprising the long-chain highly unsaturated fatty acid and/or the ester thereof derived from borage oil.

3. A vegetable fat and oil composition comprising the body taste improver of claim 1 or 2.

4. A vegetable fat and oil composition according to claim 3, wherein an α-linolenic acid content is 5 % or less.

5. A vegetable fat and oil composition according to claim 3 or 4, wherein an oleic acid content is 20∼86 %, and/or a linoleic acid content is 3∼25 %.

6. A vegetable fat and oil composition comprising a long-chain highly unsaturated fatty acid and/or an ester thereof, wherein an α-linolenic acid content is 5 % or less.

7. A vegetable fat and oil composition according to claim 6, wherein a content of the long-chain highly unsaturated fatty acid and/or the ester thereof is 10∼100,000 ppm as of the long-chain highly unsaturated fatty acid.

8. A vegetable fat and oil composition according to claim 6 or 7, wherein an oleic acid content is 20∼86 %, and/or a linoleic acid content is 3∼25 %.

9. A vegetable fat and oil composition according to any one of claims 6-8, wherein the long-chain highly unsaturated fatty acid is an n-6 long-chain highly unsaturated fatty acid.

10. A vegetable fat and oil composition according to claim 9, wherein the long-chain highly unsaturated fatty acid is arachidonic acid.

11. A vegetable fat and oil composition according to claim 10, wherein the arachidonic acid is derived from a microorganism.

12. A food having an improved body taste, comprising the body taste improver according to claim 1 or 2 or the vegetable fat and oil composition according to any one of claims 3 to 11.

13. A method for improving body taste of a food, comprising adding the body taste improver according to claim 1 or 2, or the vegetable fat and oil composition according to any one of claims 3 to 11 to the food.
